# EUROPÄISCHE PATENTSCHRIFT

(11) **EP 0 621 467 B1**
(45) Veröffentlichungstag und Bekanntmachung des Hinweises auf die Patenterteilung: **18.06.1997**
(21) Anmeldenummer: 94106278.8
(22) Anmeldetag: 22.04.1994
(51) Int. Cl.: G01G 13/04, G01G 11/08

(54) **Kontinuierliche Dosiervorrichtung**
Device for contiuous dosing
Dispositif de dosage en continu

(30) Priorität: 23.04.1993 IT MI930806
(43) Veröffentlichungstag der Anmeldung: 26.10.1994
(73) Patentinhaber: LICO SpA., I-21050 Cuasso Al Monte, Varese (IT)
(72) Erfinder: Franco, Lico, 21050 Cuasso Al Monte(Varese) (IT)
(74) Vertreter: Valentin, Ekkehard, Dipl.-Ing.

(56) Entgegenhaltungen:
- EP-A- 0 095 095
- EP-A- 0 288 415
- WO-A-92/12899
- DE-A- 3 127 131
- DE-A- 3 523 502

## Beschreibung

Die Erfindung betrifft eine gravimetrische kontinuierliche Dosiervorrichtung, bei der die Durchflußmenge durch Feststellung der Gewichtsabnahme/Zeit gesteuert wird, oder kontinuierliche Banddosierung, bei der die Durchflußmenge durch Feststellung des Gewichtes/Geschwindigkeit gesteuert wird; speziell für große Durchflußmengen.

Die z.Zt. bestehenden kontinuierlichen Dosieranlagen für feste, flüssige oder gasförmige Grundstoffe verwenden ein einziges Dosierorgan. Dies gilt sowohl für die kontinuierlichen Dosieranlagen, die mit Gewichtsverlust arbeiten, wie auch für Bandanlagen.

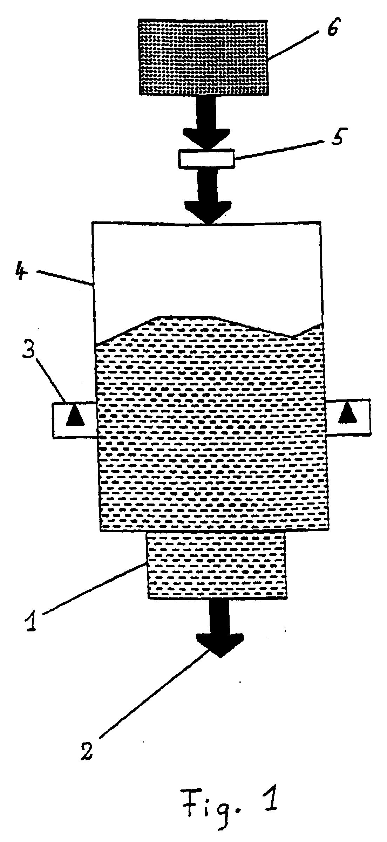

Figur 1 zeigt im Schema eine mit Gewichtsverlust arbeitende kontinuierliche Dosiervorrichtung nach der jetzigen Technologie, wo der Durchfluß durch Feststellung der Gewichtsabnahme/Zeit geregelt wird.

Figur 1A zeigt schematisch zwei kontinuierliche Dosierbandanlagen nach dem heutigen Stand der Technik, wo der Durchfluß über Feststellung des Gewichts/Geschwindigkeit kontrolliert wird.

In der Darstellung nach Fig. 1 ist bei 6 das zu dosierende Material dargestellt, bei 5 ein Absperrorgan, das von der Wiegevorrichtung geregelt wird, und worüber die automatische Auffüllung erfolgt, und bei 4 ein Vorratsbehälter für das zu dosierende Material. Bei 3 ist eine Wiegevorrichtung, bei 1 das Dosierorgan und bei 2 der Durchfluß des dosierten Materials dargestellt.

Im oberen Teil in der Darstellung nach Fig. 1A ist bei 21 der Vorratsbehälter für das Material, bei 22 das zu dosierende Material, bei 23 eine Wiegevorrichtung und bei 24 ein Dosierorgan dargestellt.

Im unteren Teil von Fig. 1A ist bei 25 der Vorratsbehälter des Materials, bei 26 das zu dosierende Material, bei 27 ein Austrage- und Dosierorgan und bei 28 eine Wiegevorrichtung dargestellt.

Die verwendeten Transportmittel bei den bekannten Anlagen sind differenziert, wie z.B. Bänder, Schnecken, Spiralen, Schwingvorrichtungen, Zellenradschleusen, Pumpen, Ventile u.ä. Sie werden je nach dem zu dosierenden Produkt gewählt und gemäß dem gewünschten Durchfluß dimensioniert.

Bei hohen Durchflußleistungen müssen natürlich die Transportmittel entsprechend groß ausgelegt sein, so daß die Anschaffungs- und Wartungskosten erheblich sind, ebenso die Energiekosten und der Platzbedarf. Z.B. genügt es, an die kontinuierliche Dosierung von 100 t/h eines Feststoffes zu denken: Die jetzige Technik erfordert den Einsatz eines Wiegebandes oder eines Fließbodens oder eine Zellenradschleuse, eine Schnecke etc. mit enormen Abmessungen, und sehr hohen Wartungs- und Energiekosten.

Die hier beschriebene Erfindung hat zum Zweck, folgende Vorteile zu erzielen:
- Verringerung des Energieverbrauches,
- Verringerung der Abmessungen des Dosierorganes,
- Verringerung der Kosten der Dosieranlage,
- Verringerung der Wartungskosten und eventuell im Verlaufe der Zeit erforderlicher Ersatzteile,
- Verringerung des Platzbedarfs für die Aufstellung,
- Erleichterung der Reinigung und sonstiger Wartungsarbeiten,
- bessere Regelung des Durchflusses.

Bei einer gravimetrischen kontinuierlichen Dosiervorrichtung, wo der Durchfluß durch die Feststellung der Gewichtsabnahme/Zeit kontrolliert wird, oder einer kontinuierlichen Band-Dosierung, wo der Durchfluß durch Feststellung des Gewichts/Geschwindigkeit kontrolliert wird, wird obiger Zweck durch die Kombination eines Grobdosierorganes mit einem Feindosierorgan erreicht, wobei beide Organe so zusammenarbeiten, daß die Summe der Durchflüsse des Grobdosierorganes und des Feindosierorganes den gesamten gewünschten Materialdurchfluß ergeben.

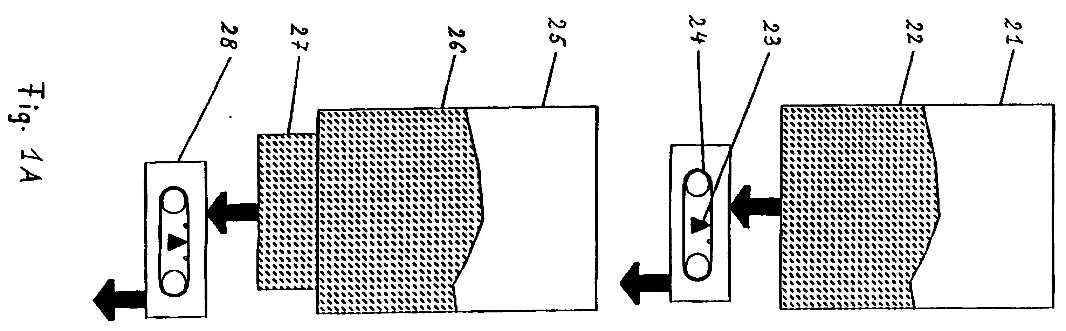

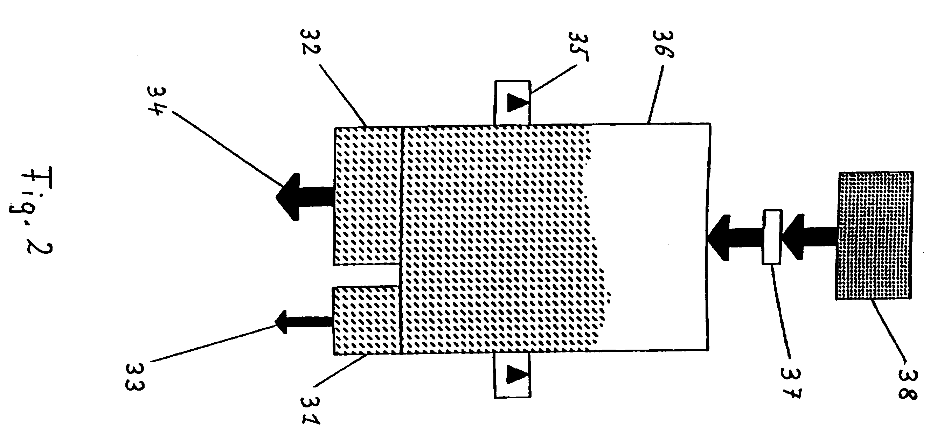

In Fig. 2 der beiliegenden Skizzen ist ein Ausführungsbeispiel der hier beschriebenen Erfindung schematisch dargestellt, ohne diese jedoch darauf zu beschränken.

Im Beispiel nach Fig. 2 ist bei 38 das zu dosierende Material dargestellt, bei 37 ein Absperrorgan, das zum automatischen Nachfüllen der Dosierer von einer Wiegevorrichtung reguliert wird, bei 36 ist der Vorratsbehälter des Produktes, bei 35 eine Wiegevorrichtung, bei 32 ein Grobdosierer dargestellt, der mit einem Ventil regelbarer Weite ausgerüstet ist oder mit einem Fließboden oder mit sonst einem Grobaustrageorgan.

Bei 31 ist ein Feindosierer dargestellt, der über irgendeine Austrage-, Transport- oder Entleervorrichtung arbeitet, die je nach dem zu dosierenden Produkt gewählt wird, z.B. Schnecken, Spiralen, Bänder, Pumpen, Zellenradschleusen, Schwinger, Ventile usw. Bei 34 ist der Grobdurchfluß dargestellt, der je nach natürlichem Fall oder Druck oder Vibration oder Fluidisierung geregelt wird, und bei 33 ist der Feindurchfluß dargestellt, der elektronisch oder pneumatisch oder magnetisch dosiert und gesteuert wird.

Wesentlich ist die Kombination eines Feindosierorganes 31 mit einem Grobdosierorgan 32, unabhängig vom verwendeten Organ.

Die Summe der beiden erzielten Durchflüsse - Feindurchfluß 33 und Grobdurchfluß 34 - bilden 100% der gewünschten Material-durchflußmenge.

Die Regelung der Materialdurchflüsse erfolgt über eine Kombination der Funktionen der beiden vorbeschriebenen Dosierungen, um die gewünschte Durchflußmenge zu erreichen.

Zum Umfang der Erfindung gehören kontinuierliche Dosiervorrichtungen, die die im Anspruch 1 definierte Kombination zweier Dosierorgane haben. Kein Bezug besteht zu Chargen- oder nicht kontinuierlichen Anlagen.

## Patentansprüche

1. Gravimetrische kontinuierliche Dosiervorrichtung, bei der die Durchflußmenge durch Feststellung der Gewichtsabnahme/Zeit gesteuert wird, oder kontinuierliche Banddosierung, bei der die Durchflußmenge durch Feststellung des Gewichtes/Geschwindigkeit gesteuert wird; speziell für große Durchflußmengen,
**dadurch gekennzeichnet,**
daß ein Grobdosierorgan (32) mit einem Feindosierorgan (31) kombiniert wird, wobei beide Dosierorgane so zusammenarbeiten, daß die Summe der Durchflußmengen (33, 34) des Grobdosierorganes (32) und des Feindosierorganes (31) die gesamte gewünschte Material-Durchflußmenge ergeben.

2. Kontinuierliche Dosiervorrichtung nach Anspruch 1,
**dadurch gekennzeichnet,**
daß an sich bekannte Mittel eingesetzt werden für die Regelung und/oder Steuerung der vom Grobdosierorgan (32) wie auch vom Feindosierorgan (31) zugeführten Durchflußmengen.

## Claims

1. Gravimetric continuous metering device, in which the throughflow quantity is constrolled by determination of the weight decrease over time, or continuous belt metering, in which the throughflow quantity is controlled by determination of weight against speed, particularly for large throughflow quantities, characterised thereby that a coarse metering element (32) is combined with a fine metering element (31), wherein both metering elements so co-operate that the sum of the throughflow quantities (33, 34) of the coarse metering element (32) and the fine metering element (31) yield the desired total material throughflow quantity.

2. Continuous metering device according to claim 1, characterised thereby that means known in themselves are used for the regulation and/or control of the throughflow quantities fed by the coarse metering element (32) as also by the fine metering element (31).

## Revendications

1. Dispositif gravimétrique de dosage en continu, dans lequel le débit est commandé par détection de la diminution du poids en fonction du temps, ou bien par dosage sur bande en continu, dans lequel le débit est commandé par détection du poids en fonction de la vitesse ; en particulier pour des débits importants, caractérisé en ce qu'un organe de dosage grossier (32) est combiné avec un organe de dosage fin (31), les deux organes de dosage coopérant de telle sorte que la somme des débits (33, 34) de l'organe de dosage grossier (32) et de l'organe de dosage fin (31) donne la valeur totale désirée du débit de matière.

2. Dispositif de dosage en continu selon la revendication 1, caractérisé en ce que des moyens connus en eux-mêmes sont utilisés pour le réglage et/ou la commande des valeurs de débit amenées par l'organe de dosage grossier (32) comme par l'organe de dosage fin (31).
